# EUROPÄISCHE PATENTSCHRIFT

(11) **EP 1 319 555 B1**
(45) Veröffentlichungstag und Bekanntmachung des Hinweises auf die Patenterteilung: **07.12.2005**
(21) Anmeldenummer: 02019687.9
(22) Anmeldetag: 04.09.2002
(51) Int. Cl.: B60R 16/02, B60R 16/04, B60R 16/06

(54) **Explosionsgeschützte Batterieabdeckung für Kraftfahrzeuge**
Explosion-protected cover for vehicle battery
Couvercle de batterie de véhicule protégé contre les explosions

(30) Priorität: 14.12.2001 DE 10161566; 28.03.2002 DE 20204964 U
(43) Veröffentlichungstag der Anmeldung: 18.06.2003
(73) Patentinhaber: AUDI AG, 85045 Ingolstadt (DE)
(72) Erfinder: Stock, Bernhard, 85111 Adelschlag (DE); Lodowicks, Egbert, Dr., 85139 Wettstetten (DE)
(74) Vertreter: Thielmann, Frank

(56) Entgegenhaltungen:
- EP-A- 0 715 362
- DE-C- 19 524 120
- US-A- 6 010 804

## Beschreibung

Die Erfindung bezieht sich auf eine aus Kunststoff bestehende Batterieabdeckung insbesondere für die Batteriezugangsöffnung im Wasserkasten eines Kraftfahrzeugs. Eine derartige Batterieabdeckung ist aus der DE 195 24 120 C bekannt.

Bei den bisherigen Kraftfahrzeugen mit im Wasserkasten eingebauter Batterie ist der komplette Wasserkasten mit einer Kunststoffabdeckung verschlossen. In dieser Komplettabdeckung befindet sich über der Batterie ein herausnehmbares Kunststoffteil, welches eine leichte Erreichbarkeit der Batterie gewährleistet.

Diese Art der Abdeckung erhöht das Risiko von Batterieexplosionen infolge elektrostatischer Zündung, da die hierfür notwendige Ladungstrennung durch das Material der Kunststoffabdeckung begünstigt wird. Bei einer unvermeidlichen immer wieder stattfindenden elektrostatischen Aufladung der Kunststoffabdeckung des Wasserkastens, insbesondere der herausnehmbaren Batterieabdeckung kommt es immer wieder zu Überschlägen, da die Hochspannung versucht sich in Richtung Minuspol der Batterie zu entladen. Wenn dabei - was in der Praxis ebenfalls nicht auszuschließen ist, sondern relativ häufig vorkommt - geringfügige Undichtigkeiten in der Batterie vorhanden sind, so kann es vorkommen, dass diese Entladung durch den Gasraum über der Batterieflüssigkeit im Inneren der Batterie erfolgt und zu einer Batterieexplosion führt.

Der Erfindung liegt daher die Aufgabe zugrunde eine Batterieabdeckung zu schaffen, die die Gefahr solcher Explosionen durch Entladung von statischen Aufladespannungen beseitigt.

Zur Lösung dieser Aufgabe ist erfindungsgemäß vorgesehen, dass die Batterieabdeckung elektrisch leitend ausgebildet und direkt mit dem Minuspol der Batterie verbunden ist.

Durch die erfindungsgemäße elektrisch leitende Ausbildung der Batterieabdeckung und ihre unmittelbare leitende Verbindung mit dem Minuspol der Batterie können sich nennenswerte elektrostatische Aufladungen in diesem Bereich überhaupt nicht mehr aufbauen, und selbst wenn, so würden sie sich über den einfacheren Weg der direkten leitenden Verbindung zum mit Masse verbundenen Minuspol der Batterie entladen und nicht über irgendwelche Undichtigkeiten in den Gasraum der Batterie eingeleitet werden können.

Die direkte leitende Verbindung zwischen der elektrisch leitenden Batterieabdeckung und dem Minuspol der Batterie kann entweder durch ein isolierendes verlängertes Kabel erfolgen, das den Batterie-Minuspol mit der elektrisch leitenden Batterieabdeckung so verbindet, dass die Verbindung auch bestehen bleibt wenn der Deckel abgenomen und seitlich auf der Wasserkastenabdeckung abgelegt wird.

Bevorzugt kann die Verbindung aber auch durch eine am Batterie-Minuspol unverlierbar angebrachte Kontaktfeder realisiert sein die elektrisch kontaktierend an der Batterieabdeckung anliegt. Diese Kontaktfeder ist dabei so ausgebildet, dass sie Kontakt zur Batterieabdeckung auch dann noch hat, wenn diese bereits ein Stück abgehoben ist bzw. den Kontakt wieder herstellt wenn die Abdeckung noch ein ganzes Stück oberhalb der Wasserkastenabdeckung angeordnet ist, so dass in jedem Fall elektrisch leitender Kontakt zwischen der Batterieabdeckung und dem Minuspol der Batterie besteht wenn die Abdeckung noch weit genug von der Batterie entfernt ist, so dass keine vorherigen Überschläge stattfinden können.

In weiterer Ausgestaltung der Erfindung kann dabei vorgesehen sein, dass die Batterieabdeckung im Bereich des Batterie-Pluspols eine Isolierungsstelle aufweist, beispielsweise eine durch einen Kunststoffdeckel ausgefüllte Aussparung oder aber auch einen Kunststoffüberzug, so dass bei einer Belastung des Deckels beim Abstützen während Wartungsarbeiten kein direkter Kontakt zwischen elektrisch leitenden Teilen der Batterieabdeckung und dem Pluspol auftreten kann.

Die erfindungsgemäße Batterieabdeckung kann sowohl aus elektrisch leitendem Kunststoff bestehen, als auch aus einem elektrisch isolierenden Kunststoff, der dann zumindest abschnittsweise mit einer elektrisch leitfähigen Beschichtung oder Einlage versehen ist.

Als elektrisch leitende Beschichtung eignen sich eine aufgeklebte Metallfolie oder eine Metallisierung oder auch eine elektrisch leitfähige Lackschicht. Als Einlage kommt insbesondere ein zur Kontaktierung abschnittsweise frei liegendes Metallnetz in Betracht.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: einen Aussschnitt des Wasserkastens eines Kraftfahrzeugs mit Kunststoffabdeckung in die eine herausnehmbare Batterieabdeckung integriert ist, und

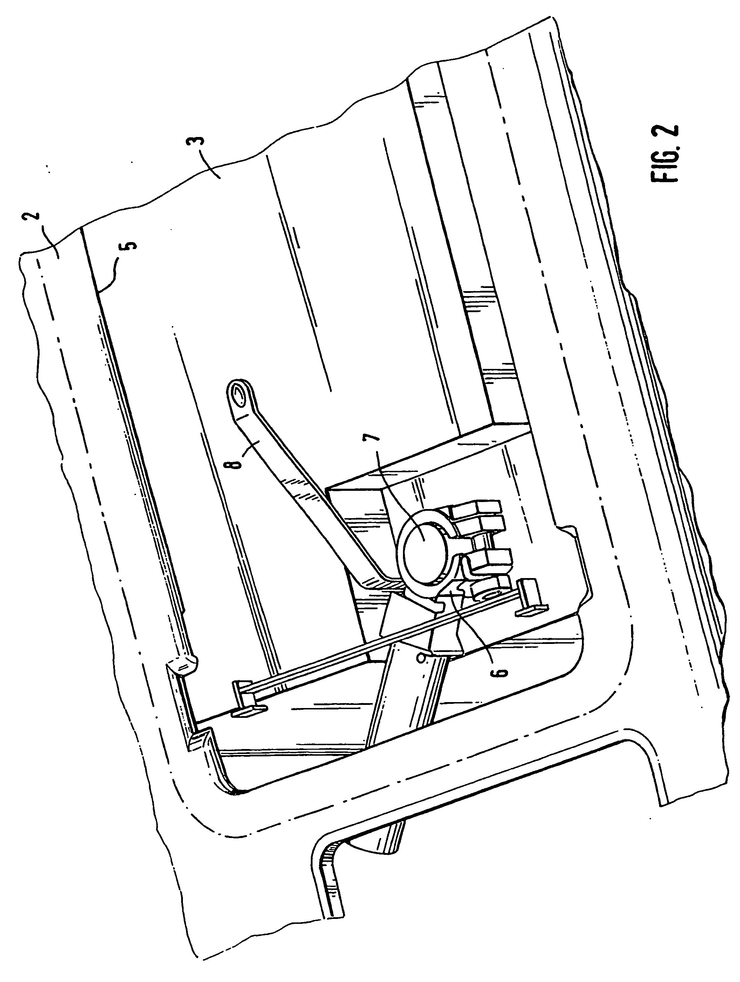

- Fig. 2: eine vergrößerte Ansicht eines Teilbereichs bei abgenommener Batterieabdeckung.

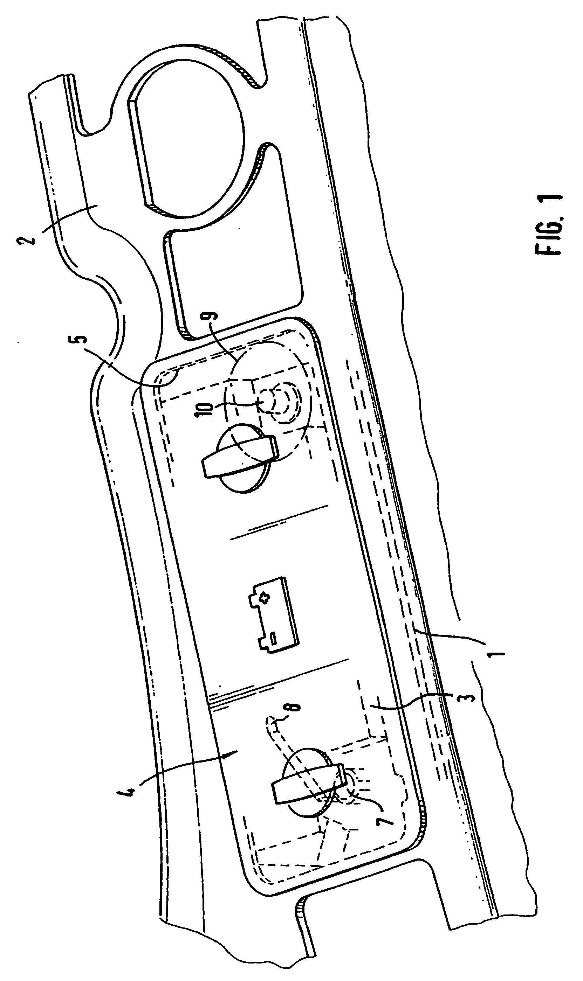

Die Fig. 1 zeigt einen Ausschnitt aus dem unterhalb der Windschutzscheibe im Motorraum angeordneten Wasserkasten 1 mit einer geschlossenen Kunststoffabdeckung 2 in der über der eingebauten Batterie 3 eine herausnehmbare Batterieabdeckung 4 vorgesehen ist, die einen freien Zugang zur Batterie freigibt, so dass sowohl an ihr Wartungsarbeiten durchgeführt werden können als auch die Batterie vollständig bei Bedarf herausgehoben werden kann. Diese Batterieabdeckung 4 überdeckt eine Batteriezugangsöffnung 5 der Kunststoffabdeckung 2. An der Kabelanschlussklemme 6 des Minuspols 7 der Batterie 3 ist beim dargestellten Ausführungsbeispiel unverlierbar eine Kontaktfeder 8 angebracht, die von unten kontaktierend an der elektrisch leitenden Batterieabdeckung 4 anliegt. Die Feder ist dabei so lang und so gebogen ausgebildet, dass die Kontaktierung der elektrisch leitenden Batterieabdeckung 4 bereits vor dem Aufsetzen auf die Kunststoffabdeckung einsetzt und auch noch eine Zeit lang besteht wenn die Batterieabdeckung abgenommen wird. Im Bereich 9 oberhalb des Pluspols 10 der Batterie 8 kann die elektrisch leitende Batterieabdeckung eine Isolierungsstelle aufweisen, die entweder durch eine Isolierschicht auf der Unterseite bzw. eine Freisparrung der aufgebrachten Metallschicht gebildet sein kann, in die ein Kunststoffdeckel eingesetzt ist.

## Patentansprüche

1. Aus Kunststoff bestehende Batterieabdeckung, insbesondere für die Batteriezugangsöffnung im Wasserkasten eines Kraftfahrzeugs,
**dadurch gekennzeichnet,**
**dass** sie elektrisch leitend ausgebildet und direkt mit dem Minuspol der Batterie verbunden ist, sodass zur Vermeidung eines Überschlags zwischen der Batterieabdeckung und der Batterie eine elektrostatische Aufladung der Batterieabdeckung über den Minuspol abgeführt wird.

2. Batterieabdeckung nach Anspruch 1,
**dadurch gekennzeichnet,**
**dass** sie durch einen isolierten ein Öffnen und Ablegen ermöglichenden, verlängerten isolierten Leiter mit dem Batterie-Minuspol verbunden ist.

3. Batterieabdeckung nach Anspruch 1,
**dadurch gekennzeichnet,**
**dass** die elektrische Verbindung eine am Batterie-Minuspol unverlierbar angebrachte Kontaktfeder umfasst.

4. Batterieabdeckung nach einem der Ansprüche 1 bis 3,
**dadurch gekennzeichnet,**
**dass** sie im Bereich des Batterie-Pluspols eine Isolierungsstelle aufweist.

5. Batterieabdeckung nach einem der Ansprüche 1 bis 4,
**dadurch gekennzeichnet,**
**dass** sie aus elektrisch leitendem Kunststoff besteht.

6. Batterieabdeckung nach einem der Ansprüche 1 bis 4,
**dadurch gekennzeichnet,**
**dass** sie aus elektrisch isolierendem Kunststoff besteht, der zumindest abschnittsweise mit einer elektrisch leitfähigen Beschichtung oder Einlage versehen ist.

7. Batterieabdeckung nach Anspruch 6,
**dadurch gekennzeichnet,**
**dass** die Beschichtung eine Metallfolie, eine Metallisierung oder eine elektrisch leitfähige Lackschicht ist.

8. Batterieabdeckung nach Anspruch 6,
**dadurch gekennzeichnet,**
**dass** die Einlage ein zur Kontaktierung abschnittsweise freiliegendes Metallnetz ist.

## Claims

1. Battery cover consisting of plastic, in particular for the battery access opening in the radiator tank of a motor vehicle,
**characterised in that** it is designed so that it is electrically conducting and is connected directly to the negative pole of the battery so that electrostatic charging is discharged via the negative pole to prevent spark-over between the battery cover and the battery.

2. Battery cover according to Claim 1,
**characterised in that** it is connected to the negative battery pole by an extended insulated conductor that allows opening and removal.

3. Battery cover according to Claim 1,
**characterised in that** the electrical connection incorporates a contact spring permanently fitted on the negative battery pole.

4. Battery cover according to Claims 1 to 3,
**characterised in that** it exhibits an insulation point in the region of the positive battery pole.

5. Battery cover according to one of Claims 1 to 4,
**characterised in that** it consists of electrically conducting plastic.

6. Battery cover according to one of Claims 1 to 4,
**characterised in that** consists of electrically insulating plastic which is provided at least in sections with an electrically conducting coating or insert.

7. Battery cover according to Claim 6,
**characterised in that** the coating is a metal foil, metallising or an electrically conducting coat of lacquer.

8. Battery cover according to Claim 6,
**Characterised in that** the insert is a metal netting that is exposed in sections for contacting.

## Revendications

1. Couvercle de batterie en matière plastique, destiné notamment à l'ouverture d'accès à la batterie dans la caisse à eau d'un véhicule automobile,
**caractérisé en ce que**
il est réalisé de façon électriquement conductrice et est relié directement au pôle négatif de la batterie, de sorte que, pour éviter une décharge disruptive entre le couvercle de batterie et la batterie, une charge électrostatique du couvercle de batterie soit évacuée par l'intermédiaire du pôle négatif.

2. Couvercle de batterie selon la revendication 1,
**caractérisé en ce que**
il est relié au pôle négatif de la batterie par un conducteur isolé prolongé permettant une ouverture et une dépose.

3. Couvercle de batterie selon la revendication 1,
**caractérisé en ce que**
la liaison électrique comporte un ressort de contact fixé de façon imperdable sur le pôle négatif de la batterie.

4. Couvercle de batterie selon l'une des revendications 1 à 3,
**caractérisé en ce que**
il comporte un emplacement d'isolation dans la zone du pôle positif de la batterie.

5. Couvercle de batterie selon l'une des revendications 1 à 4,
**caractérisé en ce que**
il est constitué de matière plastique électriquement conductrice.

6. Couvercle de batterie selon l'une des revendications 1 à 4,
**caractérisé en ce que**
il est constitué de matière plastique isolante électriquement qui est pourvue, au moins par zones, d'un revêtement ou d'un insert électriquement conducteur.

7. Couvercle de batterie selon la revendication 6,
**caractérisé en ce que**
le revêtement est un film métallique, une métallisation ou une couche de laque électriquement conductrice.

8. Couvercle de batterie selon la revendication 6,
**caractérisé en ce que**
l'insert est un treillis métallique dénudé par zones pour l'établissement du contact.
